# EUROPEAN PATENT APPLICATION

(11) **EP 0 625 638 A1**
(43) Date of publication of application: **23.11.1994**
(21) Application number: 94303546.9
(22) Date of filing: 18.05.1994
(51) Int. Cl.: F03G 7/10

(54) **Power-generating system by quantum force**

(30) Priority: 21.05.1993 JP 142799/93
(71) Applicant: Nagano, Eizo, Ota-ku, Tokyo (JP)
(72) Inventor: Nagano, Eizo, Ota-ku, Tokyo (JP)
(74) Representative: Bubb, Antony John Allen

(57) **Abstract**

Power-generating system by quantum force comprises a plurality of structural members connected to one another at points A, B and C and adapted to be operated such that instantaneous transition from a balanced state where the reaction from earth is transferred through some members under the condition that external forces act on the points A and B to unbalanced system is caused by the release of the external force. This release causes the unbalance of vectors V2 at the point B and V4 at the point C. Some amount of external forces are applied to two of the members, No. 24 and No. 27 and the connection placed at the point B and pulled inwardly instead of the external force. Therefore the infinite repetition of instantaneous transition from balanced system to unbalanced system and the inverse transition is caused. Whereby torque which rotates some member in the structural system is produced simultaneously; during these repetition and generation of torque, extra energy utilized as moment of rotation is taken out mechanically.

## Description

### Field of The Invention

This invention relates to a power-generating system by quantum force and, more particularly, to a power-generating system in which a link-motion mechanism is formed and infinite energy utilized as moment of rotation is taken out mechanically by using quantum force.

### Prior Art

If there is a system in which an input energy is not utilized directly for driving force and the reaction from earth generated by an input energy is able to be put into use in a moment, the additional acquisition of energy becomes possible. To accomplish this purpose, it is necessary to form a link-motion mechanism in the system. The word 'link-motion' means the action that the infinite repetition of instantaneous transition from balanced state to unbalanced state and the inverse transition occurs in a system. Thus once a link-motion mechanism is formed in a system, it may be possible to get infinite energy by introducing a constant energy.

### Summary of The Invention

This invention is the power-generating system in which all of structural members are connected and/or equipped cleverly so as to operate as follows; instantaneous transition from balanced structural system -- where the reaction from earth is transferred through some members -- to unbalanced system is caused by some manipulation; and the infinite repetition of instantaneous transition from balanced system to unbalanced system and the inverse transition occur; during this repetition, extra energy utilized as moment of rotation is taken out mechanically.

### Brief Description of The Drawings

Fig. 1 is a sectional view of the embodiment of the present invention;
Fig. 2 is a perspective view of the embodiment;
Fig. 3 is an enlarged perspective view of the first, the second and the third axial force members;
Fig. 4 is an enlarged perspective view of the first, the second and the third axial force members;
Fig. 5 is a detailed perspective view of three axial force members and controlling links;
Figs. 6 to 10 are explanatory views of the power-generating system in order to explain the principle of rotation mechanism;

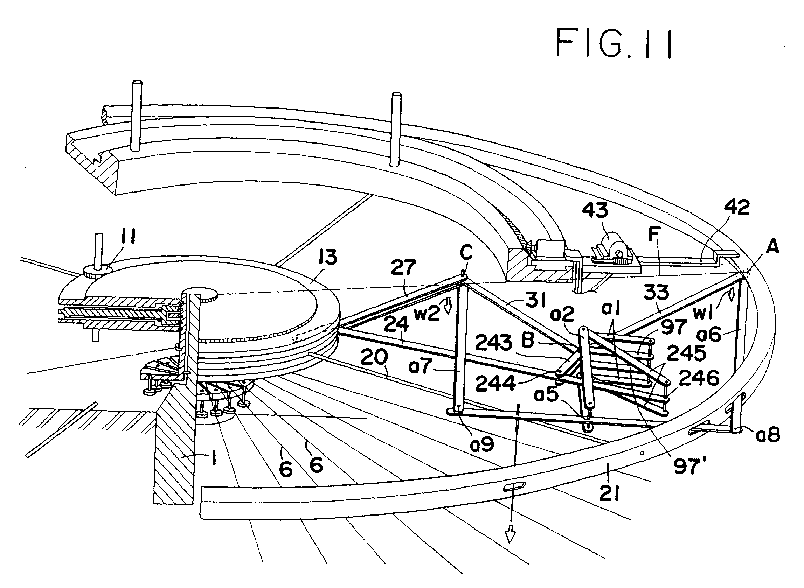

Fig. 11 is a perspective view of the embodiment;
Fig. 12 is a detailed perspective view of three axial force members and controlling links;
Fig. 13 is a relation view of balancing link-motion mechanism when external force acts;
Fig. 14 is a relation view of showing the first force-transmission step of link-motion mechanism;
Fig. 15 is a relation view of showing the second force-transmission step of link-motion mechanism;
Fig. 16 is a relation view of showing the third force-transmission step of link-motion mechanism;
Fig. 17 is a relation view of showing the fourth force-transmission step of link-motion mechanism;
Fig. 18 is a relation view of showing the fifth force-transmission step of link-motion mechanism;
Fig. 19 is a relation view of showing the sixth force-transmission step of link-motion mechanism;
Fig. 20 is a relation view of showing the seventh force-transmission step of link-motion mechanism;
Fig. 21 is a relation view of showing the eighth force-transmission step of link-motion mechanism;
Fig. 22 is a relation view of showing the ninth force-transmission step of link-motion mechanism;
Fig. 23 is a relation view of showing the tenth force-transmission step of link-motion mechanism; and
Fig. 24 is a explanatory view of showing that the structural system returns to the state shown in Fig. 5 and the force-transmission process is repeated in the order from Fig. 14 to Fig. 23;

### Description of the Preferred Embodiment

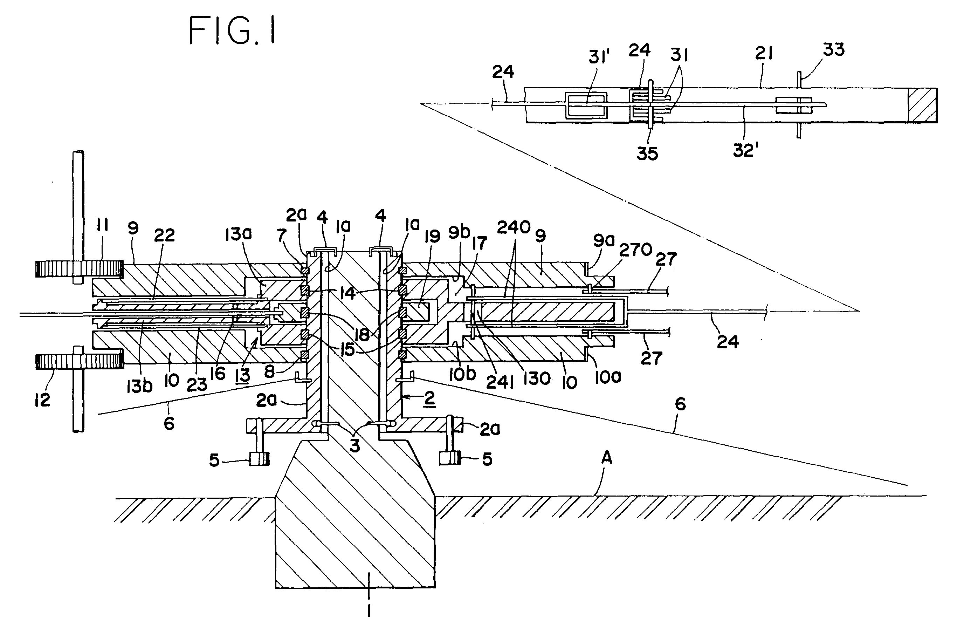

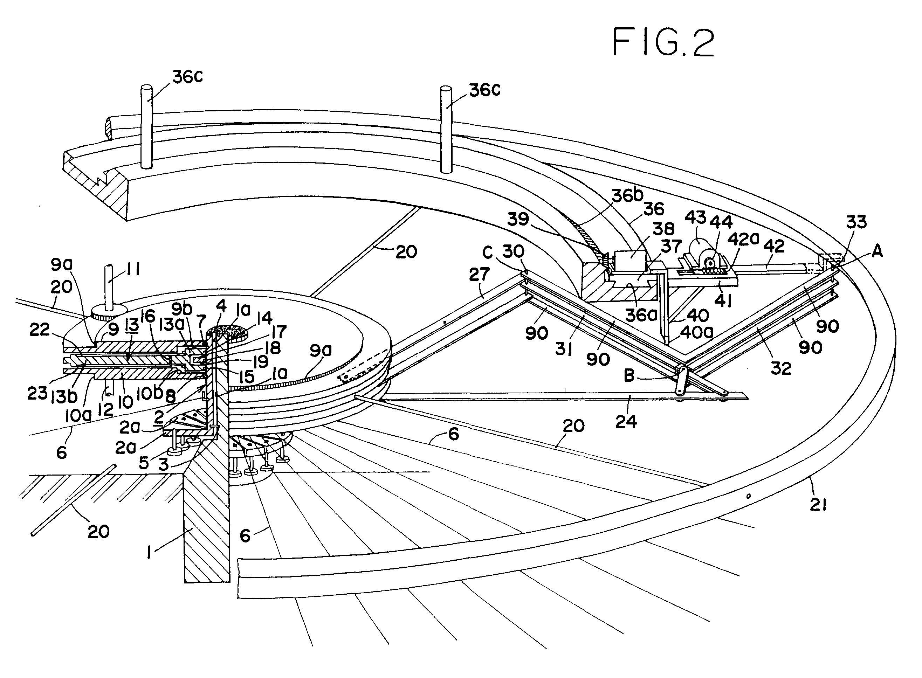

As shown in Figs. 1 and 2, a sleeve shaft 2 for oscillatory motion is equipped around an upper part of a supporting shaft 1 which is fixed to a stationary base portion A. The sleeve 2 consists of many L-shaped yokes 2a which are connected by clasps 3 and 4. A gap 1a is formed between the sleeve 2 and the shaft 1 so that the sleeve 2 can have oscillatory motion in the axial direction of the shaft 1. A plumb 5 is provided at the bottom of each L-shaped yoke 2a which is always pulled with a wire 6 so as to incline to fixed shaft 1.

Driving gears 9 and 10 are attached to the sleeve 2 with bearing members 7 and 8 and can turn round horizontally. Two pinion gears 11 and 12 are engaged with the driving gears 9 and 10, respectively. Between the driving gears 9 and 10, a controlling disk plate 13 is rotatably supported to the sleeve 2 with bearing members 14 and 15. The disk plate 13 has an inner disk plate 13a and an outer disk plate 13b, both of which are independently able to turn round horizontally by use of thrust bearings 16. The inner disk plate 13a is thicker than the outer disk plate 13b and has a hollow part 17 at the center thereof. A small disk plate 19 is rotatably supported to the sleeve 2 within the hollow part 17 with a bearing member 18.

Two connection bars 22 and 23 are radially equipped at the upper and lower sides of the controlling disk 13 so as to have both plate 13a and 13b move simultaneously. As shown in Fig. 2, four supporting bars 20 are placed every angle 90-degrees at outside of the small disk plate 19. One end of each of bars 20 penetrates the controlling disk 13 loosely and stretches radially and is connected to the small disk plate 19, and the other end is connected to the inside of rotating ring 21.

On the opposite side of the bars 22 and 23, a controlling member 24 is provided. One end of member 24 is formed in a forked portion 240 which is connected the driving gears 9 and 10 by a connection pin 241. The pin 241 penetrates vertically an opening 130 of the controlling disk 13. The pin 241 is placed eccentrically about the center of the fixed shaft 1.

A pair of third axial force members 27 are also connected to the edge part of the driving gears 9 and 10 by using connection pins 270 near the forked portion 240 of the controlling bar 24. The axial force members 27 stretch in the tangent direction of outside of driving gears 9 and 10 from a point where the connection pins 270 is placed.

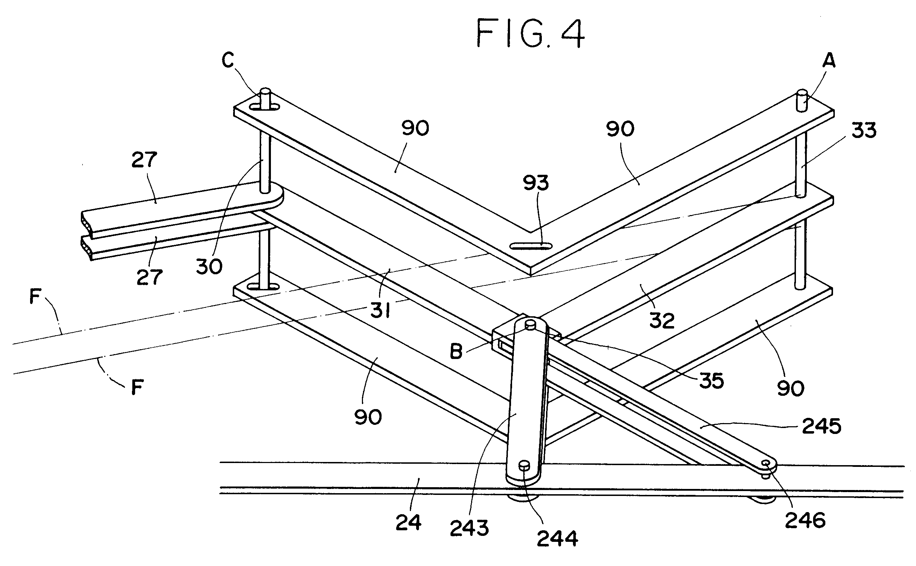

As shown in Figs. 2 to 5, a connection pin 30 is placed vertically at the free end of the third axial force member 27 and a second axial force member 31 is connected to the third force member 27 through the connection pin 30 so as to intersect at right angles. A first axial force member 32 is also connected to the second force member 31 through a pestle-like supporting member 35 so as to intersect at right angles. The other end of the first axial force member 32 is linked to the rotating ring 21 by inserting a supporting pin 33. In other words, the first and second axial force members 32 and 31 are placed so as to form a right-angled equilateral triangle between one end of the third axial force member 27 and the rotating ring 21 as shown in Fig. 2.

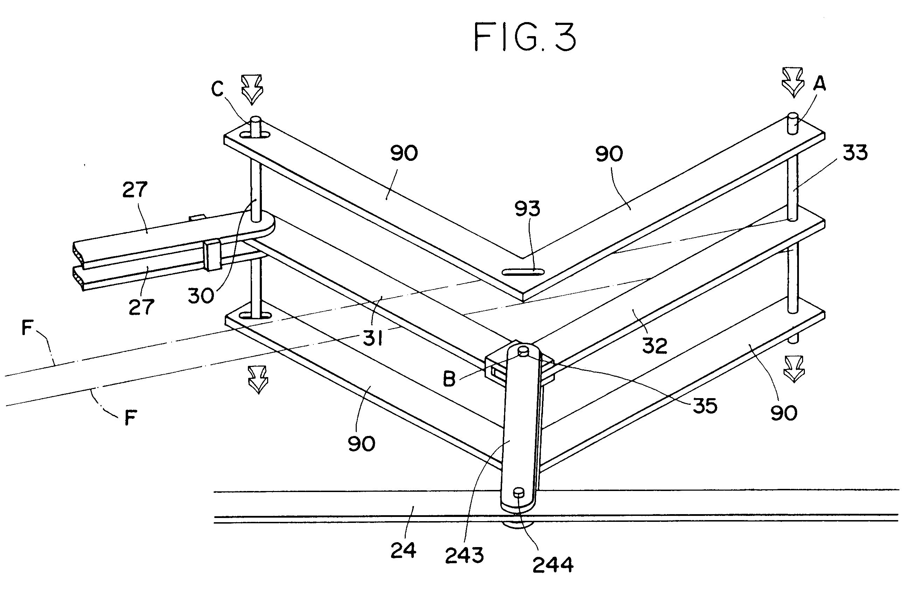

As recognized from Figs 3 to 5, sub-axial force members 90 are equipped at the upper side and the lower side of both members 31 and 32. Each sub-axial force members 90 is a L-shaped rigid plate whose shape is similar to the first and the second axial force members 32 and 31. An oval-shaped hole 91 is made at one end of each of the force members 90. The longitudinal direction of the hole 91 is perpendicular to the trajectory of the connection pin 30 when it rotates around the fixed shaft 1. And through the holes 91, the sub-axial force members 90 are connected to the connecting pin 30. The other end of each of the force members 90 is connected to the supporting pin 33 which also connects the first axial force member 32 to the rotating ring 21 (see Fig. 2). The force members 90 can rotate freely around the supporting pin 33.

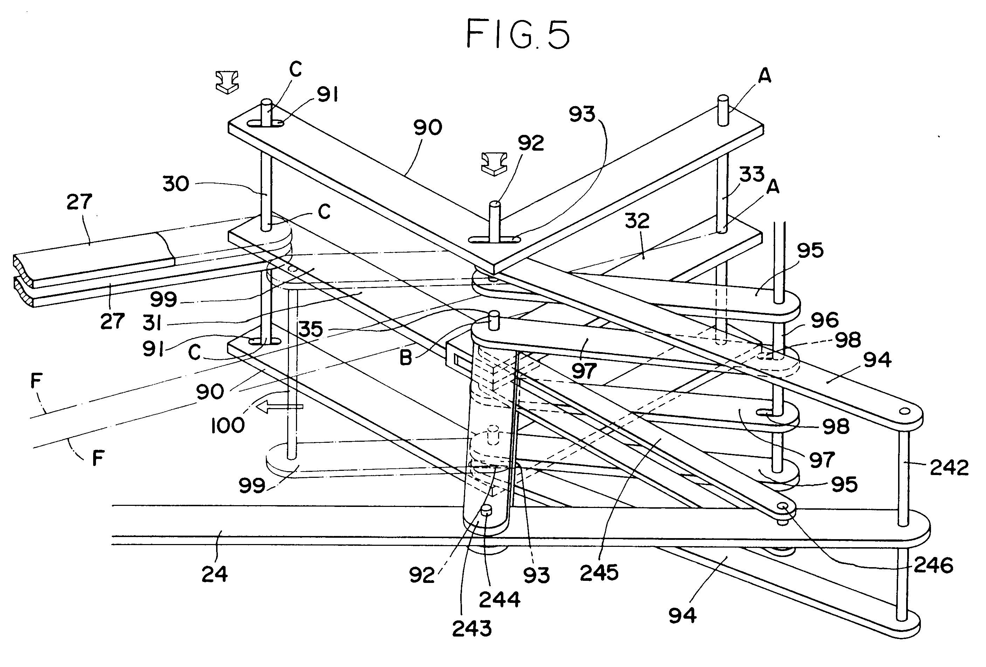

At each bent corner of force members 90, an oval-shaped hole 93 whose longitudinal direction is perpendicular to the trajectory of the connection pin 35 when it rotates around the fixed shaft 1 is provided. Supporting pins 92 whose axes are on the same line as the axis of the supporting pin 35 are set up so as to penetrate the oval-shaped holes 93, respectively. The pins 92 are connected to one end of linking members 94 which stretch in the direction of the axis of the second axial force member 31. The other ends of linking members 94 are connected to one end of the controlling bar 24 by using a connection pin 242 (refer Fig. 5).

The controlling bar 24 is also connected with one end of a first controlling link 243 through a connecting pin 244. The other end of the link 243 has the supporting member 35 which connects the second axial force member 90 with the first axial force member 32. The axis of the link 243 stretches in the tangent direction of the trajectory of the connection pin 35 when it rotates around the fixed shaft 1. Furthermore, the controlling bar 24 is connected with a second controlling link pestle 245 through a connecting pin 246 between the pins 242 and 244. The axis of link 245 is in the same direction as the axis of the second force member 31.

Linking members 95 are connected to the supporting shaft 92 so that the angle between the first force member 32 and the linking members 95 is always kept to be 45 degrees. The linking members 95 are connected each other through a connection shaft 96 at one end of each member. Linking members 97 are set up between the upper and lower linking members 95. An oval-shaped hole 98 whose longitudinal direction is perpendicular to the trajectory of the connection pin 35 when it rotates around the fixed shaft 1 is provided at one end of each of members 97. The connection shaft 96 penetrates through the holes 98. The other end of the linking member 97 is connected to the supporting member 35. Linking members 99 stretch in the opposite direction of the linking members 95 and are connected to the supporting shafts 92 at one end. The other ends of members 99 are connected each other by a connection shaft 100 as shown in Fig. 5.

As shown in Fig. 2, a fixed guide rail 36 is provided in a concentric configuration of the rotating ring 21. The guide rail 36 is immovable because it is fixed to an immovable foundation (not shown) with members 36c. A groove 36a is provided within the fixed guide rail 36. A rack 36b is set up along by the groove 36a. A movable plate 37 is mounted within the groove 36a. A bevel gear 39 which is equipped with a driving motor 38 on the movable plate 37 meshes with the rack 36b.

A pushing member 40 is also furnished with the movable plate 37 and is able to push the supporting member 35 with a pushing tip 40a. A plate 41 is also equipped horizontally with the pushing member 40. A hitting bar 42 is provided with the plate 41. The bar 42 is slidably along by a rack 42a and biased by a spring (not shown).

A partially lacking gear 44 which is furnished with an operating motor 43 meshes with the rack 42a intermittently. A free end of the hitting bar 42 is shaped like a fork and is opposite to the supporting pin 33.

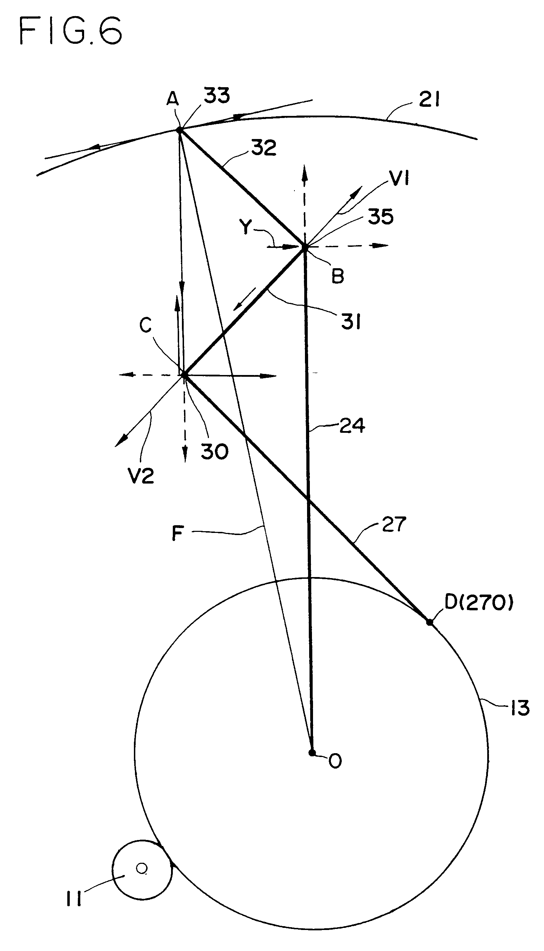

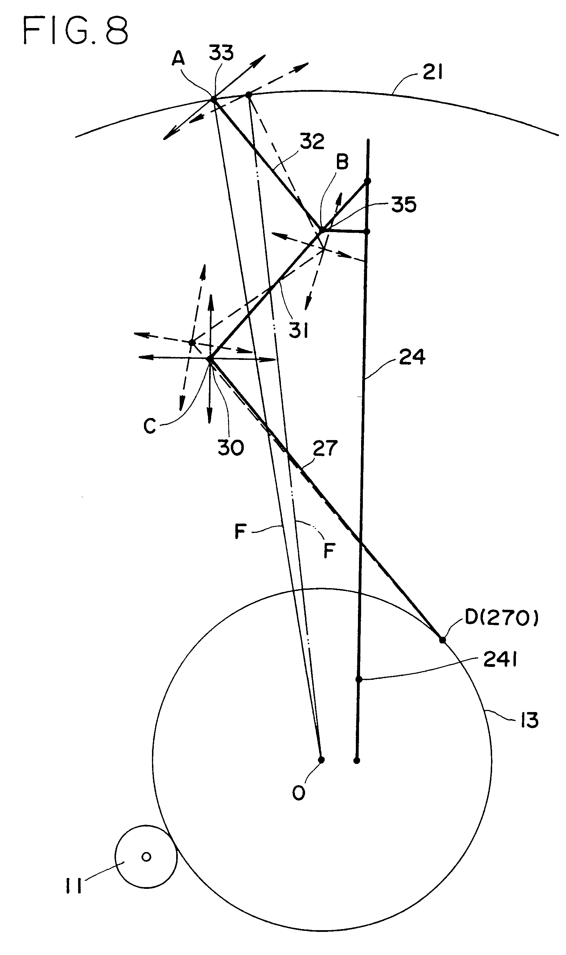

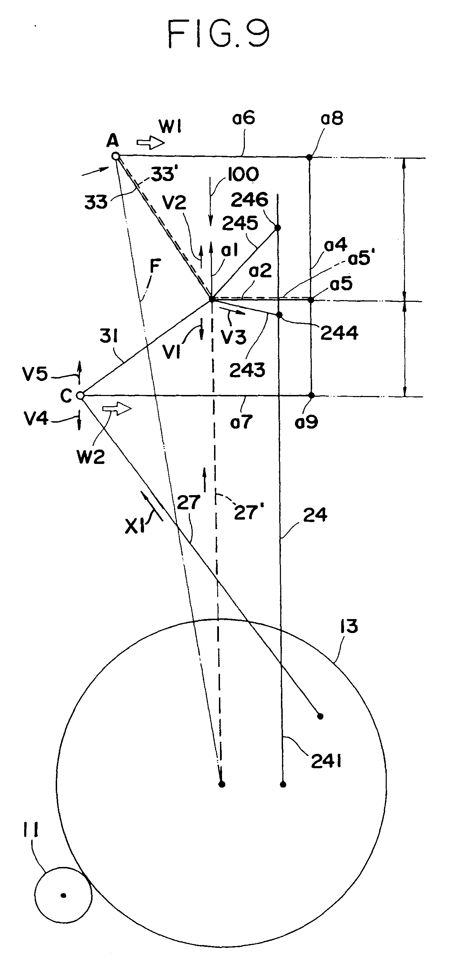

The device shown in Figs. 6 to 10 is a simplified version of the above described embodiment for explaining the operation of the present invention. In these Figures, the controlling disk 13 which rotates around the center O of the shaft 1 is engaged with the pinion gear 11. The rotating ring 21 which is placed outside of the disk 13 has the same center O of rotation as the disk 13. The ring 21 and the disk 13 are connected by the supporting bars 20 (not shown in Figs. 6 to 10). Numeral A is a connection point where the ring 21 and the first force member 32 are connected by the supporting pin 33. Numeral B is a connection point where the first and the second force members 32 and 31 are connected by the supporting pin 35. Numeral C is a connection point where the second and the third force members 31 and 27 are connected by the connection pin 30. Numeral D is a connection point where the third force member 27 and the disk 13 are connected by the connection pin 270. The controlling bar 24 is set up between the point B and the rotational center O of the disk 13.

The third axial force member 27 stretches from the connection point D in the tangent direction of the controlling disk 13. The second axial force member 31 is connected with the the third member 27 at the point C and intersects the third member 27 at right angles. The first axial force member 32 is connected with the the second member 31 at the point B and intersects the second member 31 at right angles. Therefore, three axial force members 27, 31 and 32 form a pin-connected link-structure as shown in Fig. 6. It is assumed that the normal force F acts between the points A and O so as to keep its distance constant.

The link-structure shown in Fig. 6 balances when an external force Y acts at the point B. In this case, three forces Y, V1 and V2 are well-balanced.

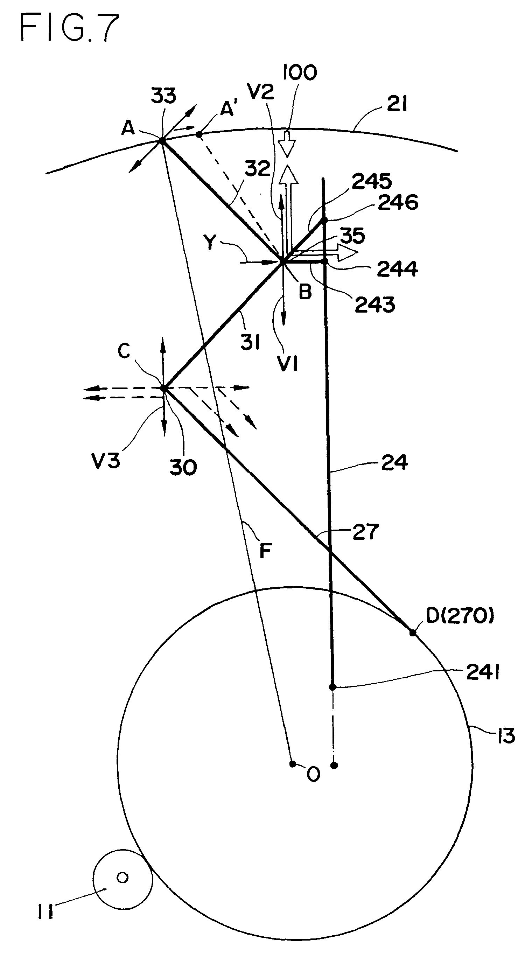

In the next step, the link-structure shown in Fig. 6 is modified into the structural system shown in Fig. 7.

In the modified structural system, the controlling bar 24 is shifted in the direction of the external force Y. By using the connection pin 270, the controlling bar 24 is connected to the controlling disk 13 eccentrically against the rotational center O of the disk 13. On the other hand, the controlling bar 24 is connected to the point B by using first and second controlling links 243 and 245.

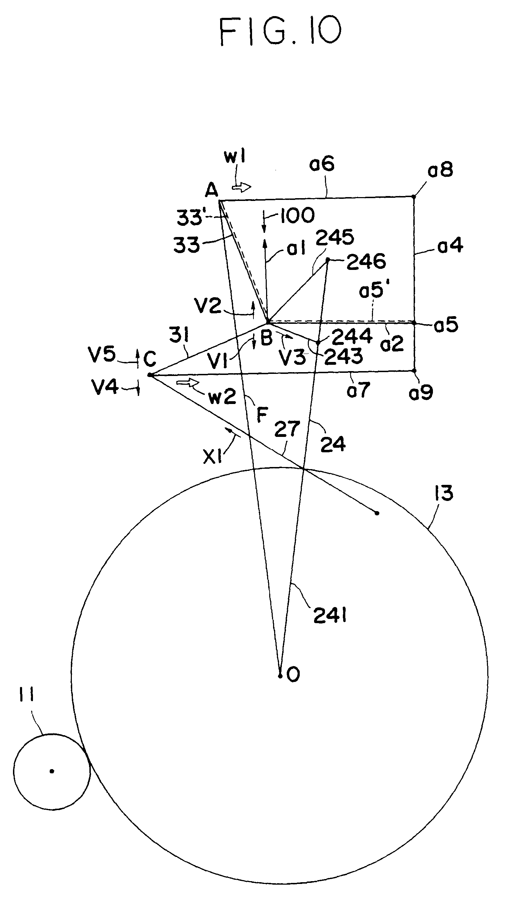

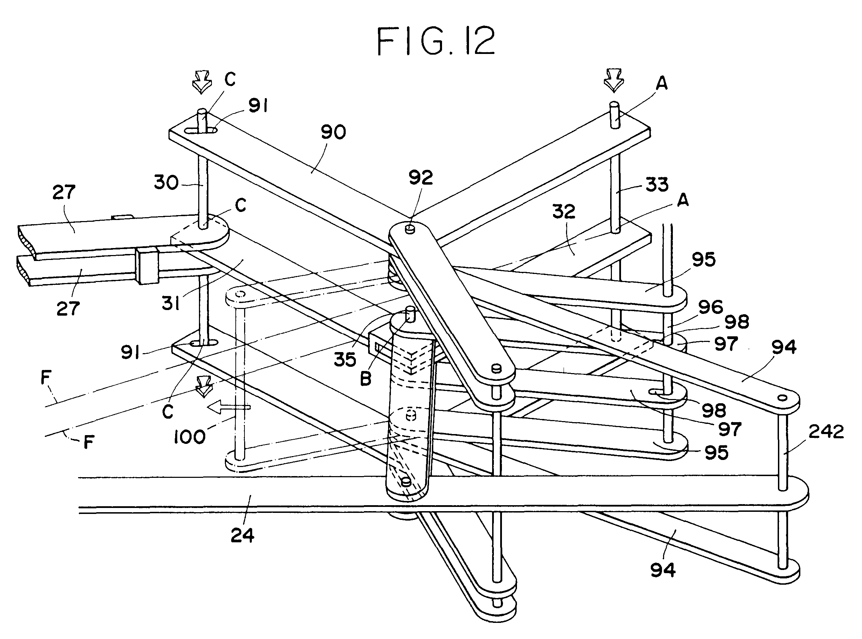

The principle of this invention is explained hereinafter referring Fig. 10. Fig. 10 shows the structural system in which the symbol '90' in Fig. 12 is shifted to the position of symbol 'a4'. An external force w1 acting on the point A is decomposed into two components such as normal line component F and component 33. On the other hand, an external force w2 is also decomposed into component 31 and component 27. The components 31 and 33 produce the balance among component 243, vector V1 and vector V2 at point B. Furthermore the component 243 is exerted on the point 244 and then transmitted to the points 241 and 246.

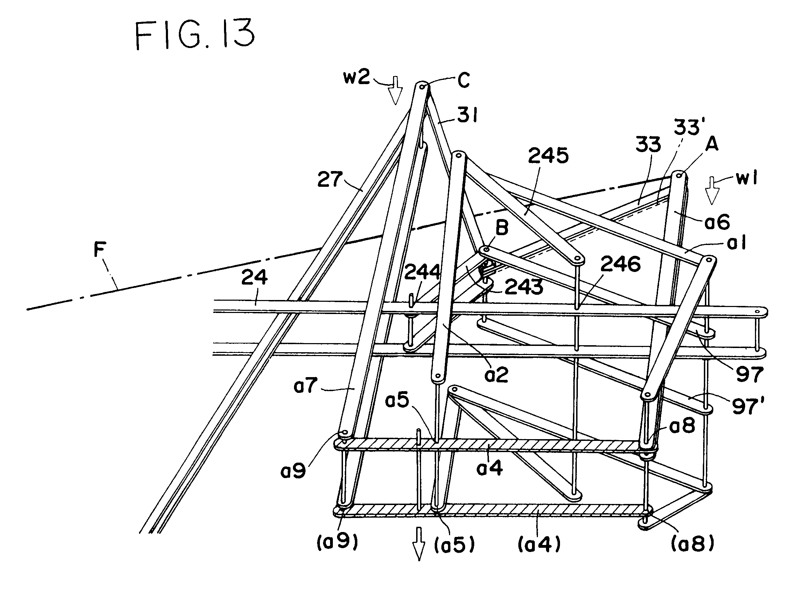

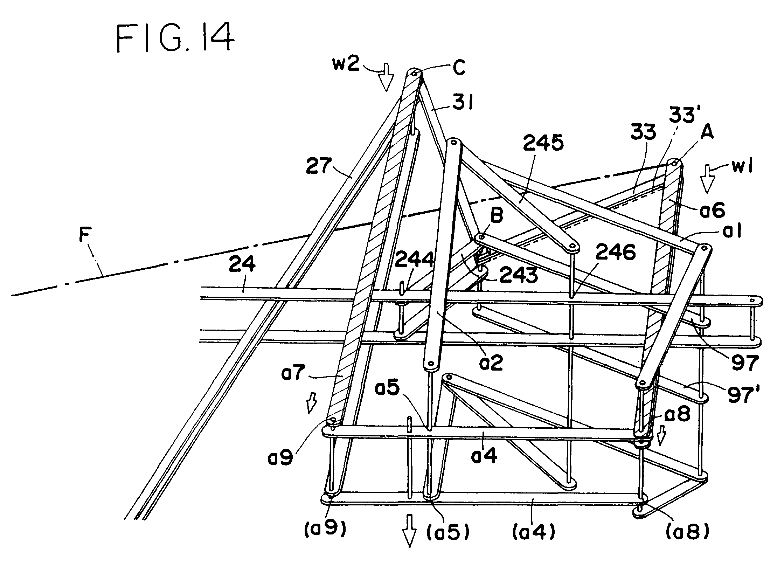

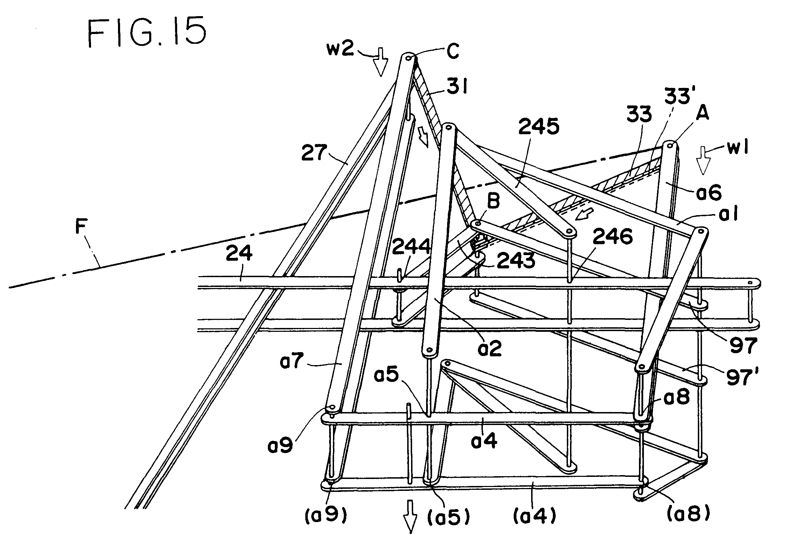

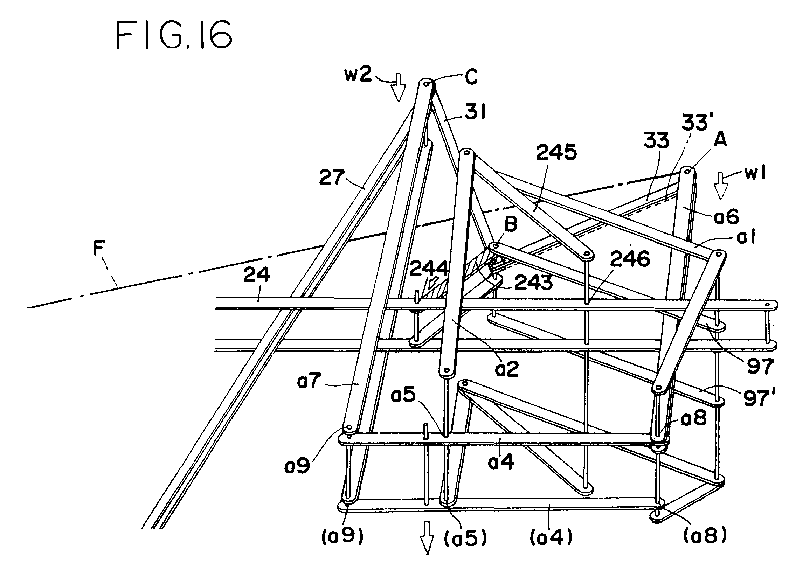

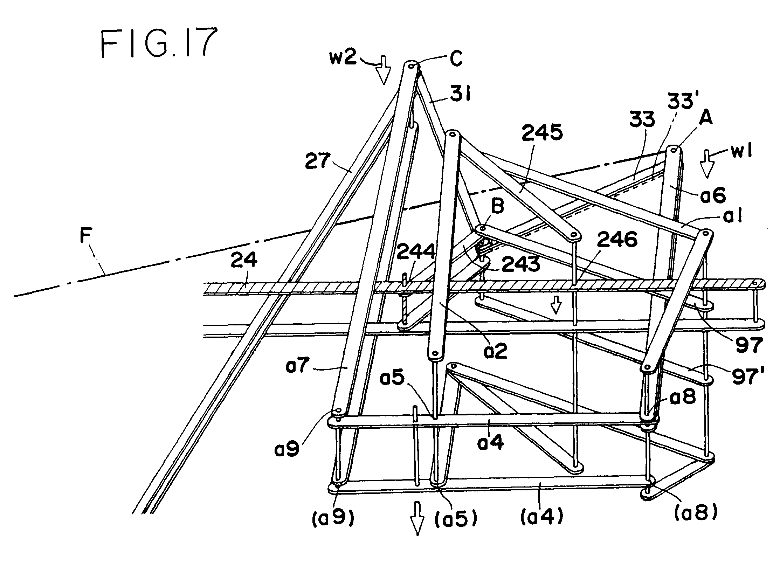

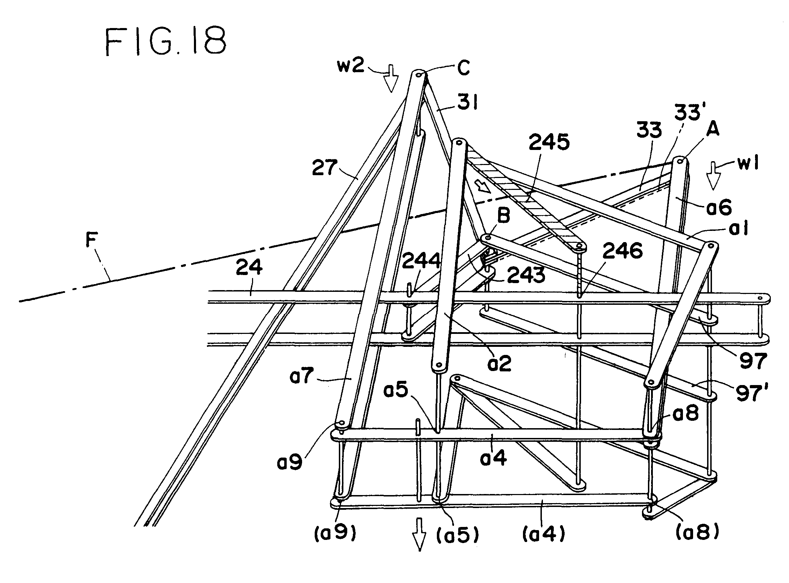

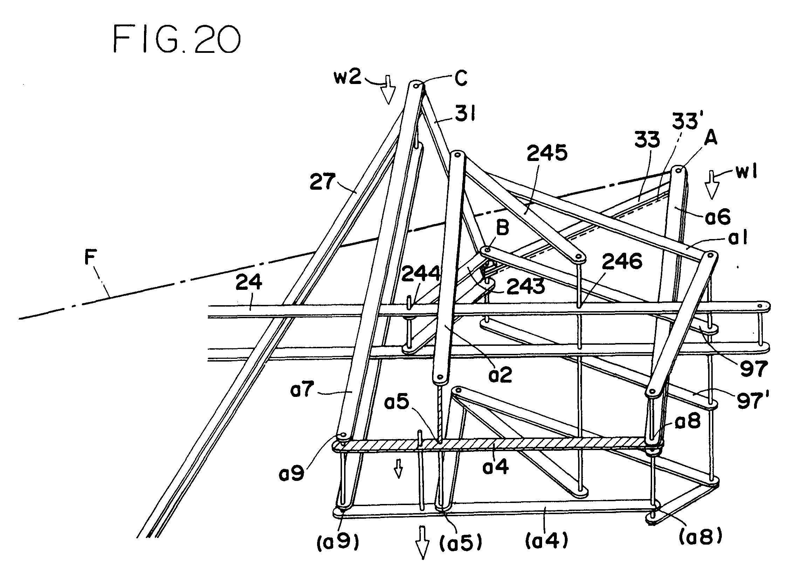

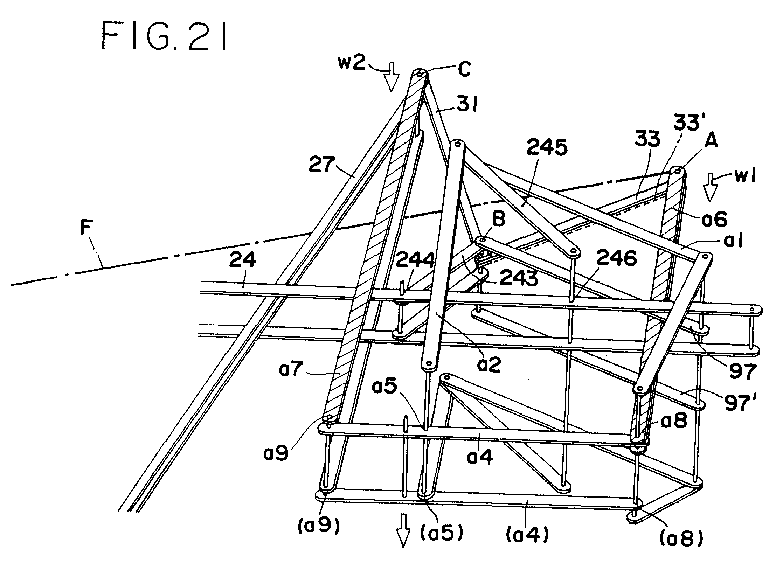

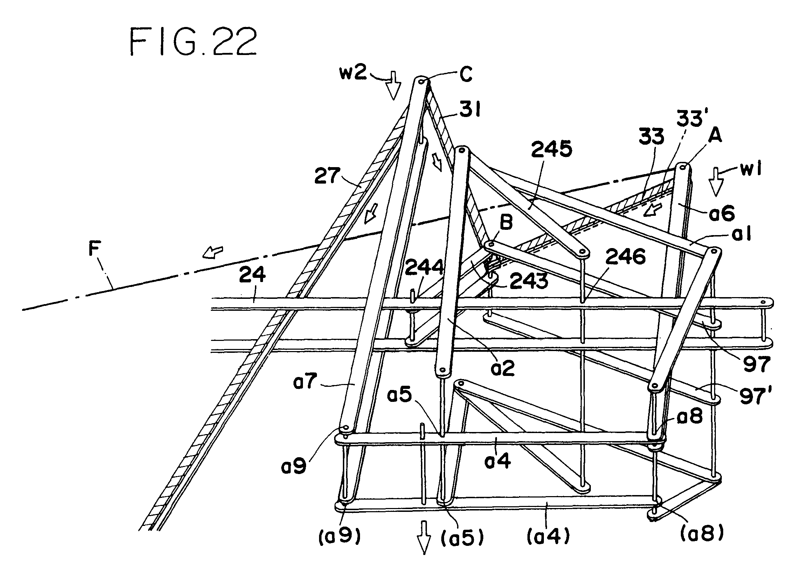

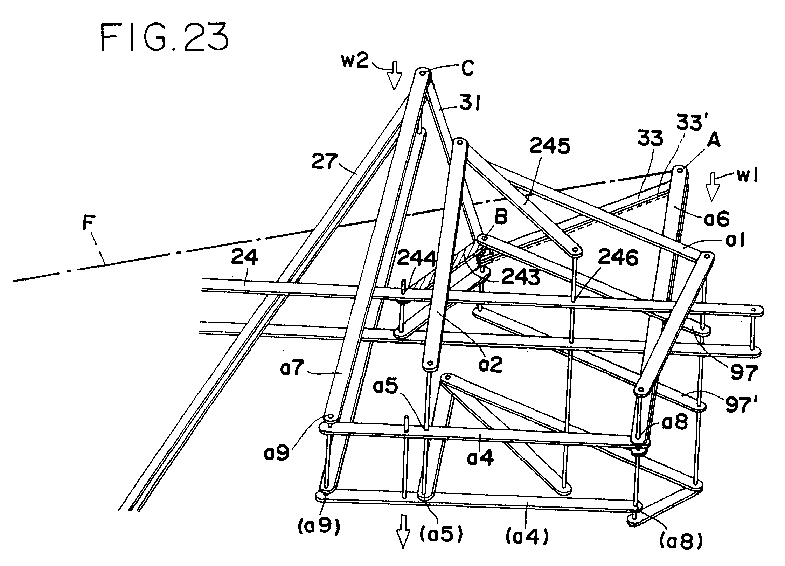

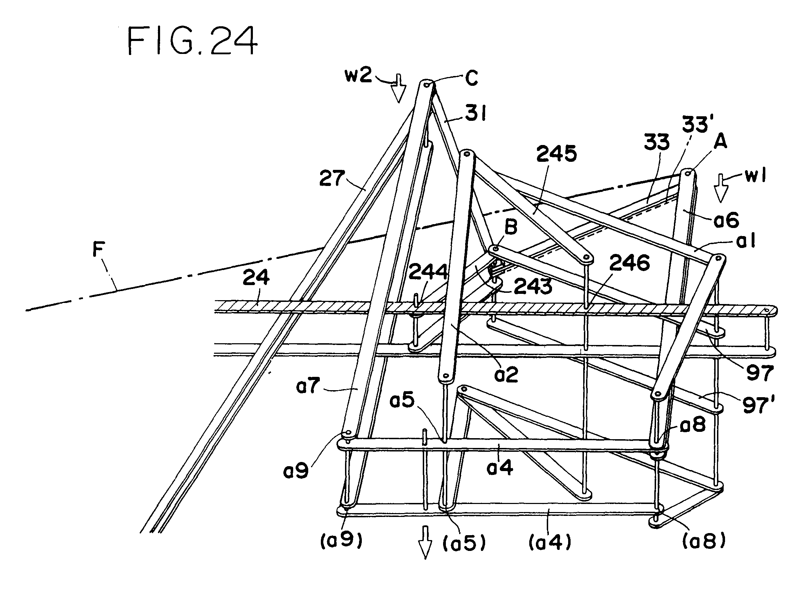

The force acting on point 246 is decomposed into two components a1 and a2 through the member 246. The force a1 is balanced with the force 100. The force a2 is transmitted to the points a8 and a9 through the point a5. The force acting on the point a8 is then transmitted to the point A through the point a6. And the force acting on the point a9 is transmitted to the point C through the point a7. In other words, through the process described so far, external force acts on point C again and the structural system leads to the equilibrium of forces. This force-transmission process is expressed in Figs. 13 to 24 according to the order of figure number. In these figures, the shadowed portion indicates the members which play a role of force transmission.

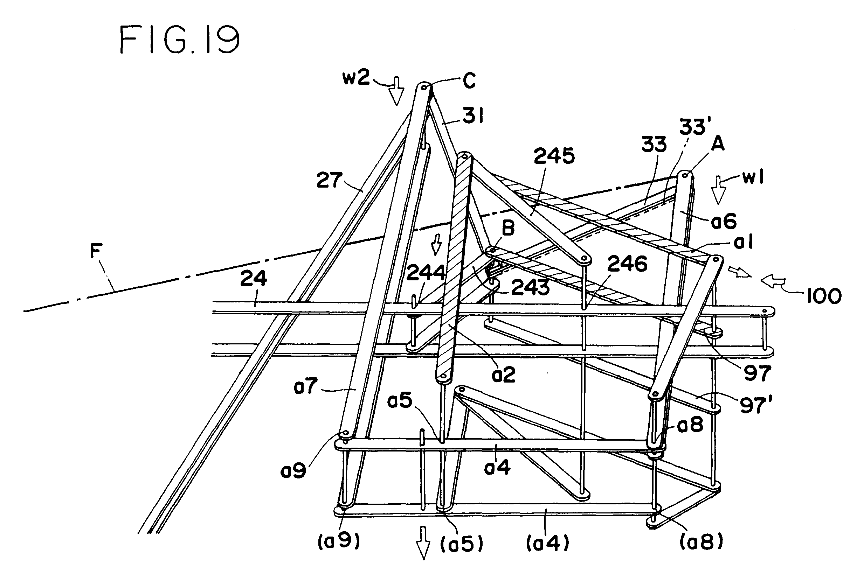

If the reaction force 100 is removed purposely and the members shown in Fig. 19 are shifted when the structural system has led to the equilibrium of force, the equilibrium of force at point B and C is lost. That is, vectors V2 and V4 do not balance.

At this moment, if some amount of force is exerted on the member 27 in the direction of X1 expressed in Fig. 10, moment of rotation acts on the structural system and this torque has the point A rotate. Here, an attempt to transmit the force acting on the point A to the point a5 through the member 33′ and a2, which are expressed by the dotted line in Fig. 10, is made. This attempt indicates that a new energy-producing system is formed by use of the repetition of balance and unbalance process described so far. In order to form this new system, the point 241 on the member 24 is shifted to the point O, the member 27 is extended so as to bring the point B close to the normal line F, and accordingly the member 90 shown in Fig. 12 is shifted to the member a4 as closely as possible.

In this invention, the reaction from earth is transferred to the system through the members 6 and its force is accumulated in the system by use of the process described above.

## Claims

1. Power-generating system by quantum force in which all of structural members are connected and/or equipped cleverly so as to be operated as follows; instantaneous transition from balanced structural system - where the reaction from earth is transferred through some members under the condition that external forces act on points A and B - to unbalanced system is caused by the removal of the external force No. 100; at the same time, the connection shaft placed at the point B works instead of No. 100; the above removal causes the unbalance of vectors V2 at the point B and V4 at the point C; some amount of external forces are applied on the members No. 24 and No. 27; therefore the infinite repetition of instantaneous transition from balanced system to unbalanced system and the inverse transition is caused internally; torque which rotates some member in the externally stable structural system is newly produced; accordingly extra energy utilized as moment of rotation is taken out mechanically during these repetition and generation of torque.
